(19) **Europäisches Patentamt European Patent Office Office européen des brevets**

(11) **EP 4 359 687 B1**

(12) **FASCICULE DE BREVET EUROPEEN**

(45) Date de publication et mention de la délivrance du brevet:
**05.08.2026 Bulletin 2026/32**

(21) Numéro de dépôt: **22732181.7**

(22) Date de dépôt: **08.06.2022**

(51) Classification Internationale des Brevets (IPC):
**F16H 61/02** *(2006.01)*  **B60W 20/30** *(2016.01)*
**B60W 50/029** *(2012.01)*  **B60W 30/188** *(2012.01)*
**F16H 59/48** *(2006.01)*

(52) Classification Coopérative des Brevets (CPC):
**B60W 50/029; B60W 30/188;** B60W 20/30;
B60W 2510/246; B60W 2520/10; B60W 2530/12;
B60W 2530/16; B60W 2540/215; B60W 2555/20;
B60W 2710/1005; B60W 2720/106; F16H 61/0213

(86) Numéro de dépôt international:
**PCT/EP2022/065473**

(87) Numéro de publication internationale:
**WO 2022/263243 (22.12.2022 Gazette 2022/51)**

(54) **PROCÉDÉ DE COMMANDE D'UNE TRANSMISSION AUTOMATIQUE EN CAS DE BAISSE DE PERFORMANCE DU GROUPE MOTOPROPULSEUR**

VERFAHREN ZUR STEUERUNG EINES AUTOMATISCHEN GETRIEBES IM FALLE EINES LEISTUNGSABFALLS DES ANTRIEBSSTRANGS

METHOD FOR CONTROLLING AN AUTOMATIC TRANSMISSION IN THE EVENT OF A DROP IN PERFORMANCE OF THE POWERTRAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2021 FR 2106243**

(43) Date de publication de la demande:
**01.05.2024 Bulletin 2024/18**

(73) Titulaire: **Ampere SAS**
**92100 Boulogne-Billancourt (FR)**

(72) Inventeurs:
• **KONTOPOULOS, Vasileios**
**91510 LARDY (FR)**
• **LEFEVRE, Aurelien**
**95510 LARDY (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
FR-A1- 3 001 936    FR-A1- 3 005 920
FR-A1- 3 048 937    FR-A1- 3 086 362

**Description**

*Domaine technique*

L'invention a pour domaine technique la commande des boites de transmission automatique, et en particulier, le choix de l'état cinématique de telles boites.

*Techniques antérieures*

Sur un véhicule automobile muni d'une boite de transmission automatique, on définit un état de chaine cinématique cible comme étant une combinaison de coupleurs et de réducteurs spécifiques à l'architecture du véhicule.

Le choix de l'état de la chaine cinématique cible permet de faire une sélection optimale parmi les états possibles en prenant en compte un nombre donné de contraintes. La capacité du véhicule de répondre à la charge du groupe motopropulseur requise par le conducteur via la pédale d'accélération est assurée par l'une des contraintes les plus importantes, la contrainte de performance. L'état de chaine cinématique choisi comme cible doit pouvoir assurer au véhicule l'accélération exigée par le conducteur. Dans le cas d'une baisse des performances du groupe motopropulseur liée, soit à la baisse des couples maximaux offerts par les organes de tractions (baisse de la pression atmosphérique pour le moteur thermique, protection thermique de la batterie ou de la machine électrique, etc.), soit au choix du mode (EV ou Hybride versus mode Sport), il est nécessaire d'adapter les contraintes de performance afin de requérir une contrainte réalisable par le groupe motopropulseur.

De l'état de la technique antérieure, on connait le document FR2992040 traitant du cas particulier d'un choix de rapport basé sur l'accélération maximale pour le rapport courant, lorsqu'un système de régulation de vitesse est actif. Il n'est pas fait mention d'une prise en compte d'une baisse des performances du groupe motopropulseur.

Les documents FR3086362, FR3001936 et FR3048937 sont également connus et présentent des procédés de commande d'un véhicule automobile différents de l'invention.

Il existe donc un besoin d'adaptation de la contrainte de performance qu'un état de la chaîne cinématique doit respecter pour être choisi pour cible, dans le cas d'une baisse des performances du groupe motopropulseur.

*Exposé de l'invention*

L'invention a pour objet un procédé de commande pour un véhicule automobile, muni d'un groupe motopropulseur et d'une transmission automatique, comprenant les étapes suivantes :

- on détermine la vitesse du véhicule, la force statique maximale disponible à la roue pour chaque état de la chaine cinématique, les masses équivalentes de chaque état de la chaine cinématique du véhicule, une contrainte d'accélération existante en cas nominal,
- lorsque l'on détermine qu'une baisse des performances du groupe motopropulseur a lieu, on réalise les étapes suivantes :
- on détermine l'accélération maximale du véhicule en fonction de la vitesse du véhicule, de la force statique maximale disponible à la roue pour chaque état de la chaine cinématique et des masses équivalentes de chaque état de la chaine cinématique du véhicule,
- on détermine l'accélération maximale du véhicule dégradée en fonction de l'accélération maximale du véhicule, de la vitesse du véhicule et du typage global de la fonction responsable du choix de l'état chaîne cinématique,
- on détermine une contrainte d'accélération actualisée en fonction de l'accélération maximale du véhicule dégradée et de la contrainte d'accélération existante en cas nominal,
- on détermine un état de chaine cinématique en fonction de la contrainte d'accélération actualisée et on commande la transmission automatique en fonction de l'état de chaine cinématique déterminé.

Pour déterminer l'accélération maximale du véhicule, on peut réaliser les étapes suivantes :

- on détermine une force résistive théorique appliquée au véhicule en fonction de la vitesse du véhicule avec l'aide d'une cartographie,
- on détermine la force totale théorique appliquée sur véhicule pour chaque état de la chaine cinématique en fonction de la force statique maximale disponible à la roue pour chaque état de la chaine cinématique et de la force résistive théorique appliquée au véhicule,
- on détermine l'accélération maximale de chaque état de la chaine cinématique en fonction des masses équivalentes de chaque état de la chaine cinématique du véhicule et de la force totale théorique appliquée sur véhicule pour chaque état de la chaine cinématique

- on détermine l'accélération maximale du véhicule comme la valeur maximale parmi l'accélération maximale de chaque état de la chaine cinématique.

Pour déterminer l'accélération maximale du véhicule dégradée, on peut réaliser les étapes suivantes :

- on détermine un coefficient de performance en fonction de la vitesse du véhicule, du typage global de la fonction responsable du choix de l'état chaîne cinématique et d'une cartographie,
- on détermine l'accélération maximale du véhicule dégradée comme le produit de l'accélération maximale du véhicule et du coefficient de performance.

On peut déterminer la contrainte d'accélération actualisée comme la valeur maximale parmi l'accélération maximale du véhicule dégradée et la contrainte d'accélération existante en cas nominal.

Le procédé de commande selon l'invention présente l'avantage de s'adapter automatiquement en temps réel en minimisant le nombre de paramètres de réglage permettant la simplification de la mise au point

Le procédé de commande peut être implémenté sur tout véhicule possédant une transmission automatique à rapport discret.

## Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :

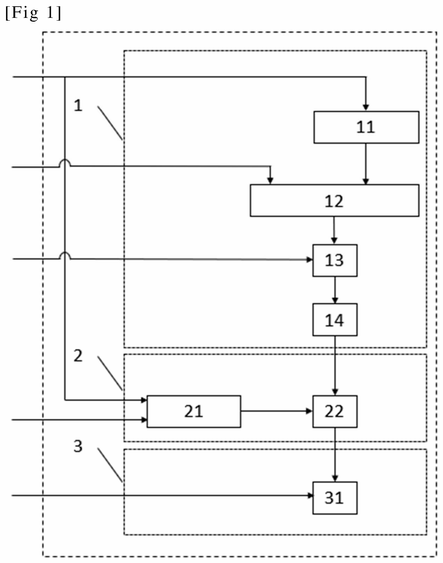

- la figure 1 illustre les principales étapes d'un procédé de commande selon l'invention.

## Description détaillée

Le procédé de commande a pour but de déterminer d'adapter la contrainte de performance qu'un état chaîne cinématique doit satisfaire pour être éligible comme cible, dans le cas d'une baisse des performances du groupe motopropulseur. Dans certaines conditions, comme la baisse de la pression atmosphérique pour le moteur thermique ou la protection thermique de la batterie pour un moteur électrique, le groupe motopropulseur pourrait ne pas être en capacité de fournir l'accélération requise initialement par le conducteur dans les conditions nominales. Il est donc primordial que les contraintes de performance soient adaptables en temps réel, en fonction de la force maximale à la roue pouvant être réalisée par le groupe motopropulseur.

La contrainte de performance existante est exprimée sous la forme d'une accélération (m/s$^2$) qui est facilement quantifiable en termes de ressenti des passagers et de performance du véhicule.

Le procédé de commande d'une transmission automatique comprend trois étapes 1,2,3, illustrées par la figure 1, permettant de déterminer une contrainte d'accélération adaptée FINAL_ACCEL_CST_SAT, dans le cas d'une baisse des performances du groupe motopropulseur. Cette contrainte d'accélération adaptée doit être respectée par un état de chaîne cinématique pour être éligible à devenir une cible choisie pour être réalisée par la transmission automatique.

La première étape 1 permet de déterminer l'accélération maximale du véhicule MAX_VEH_ACCEL en fonction de la vitesse du véhicule VEH_SPD, de la force statique maximale disponible à la roue pour chaque état de la chaine cinématique MAX_WHL_FORC_DLS et des masses équivalentes de chaque état de la chaine cinématique du véhicule VEH_EQ_WGHT_DLS.

La deuxième étape 2 permet de déterminer l'accélération maximale du véhicule MAX_VEH_ACCEL_CST dégradée (en d'autres termes, après avoir pris en compte une éventuelle baisse de performance du groupe motopropulseur) en fonction de l'accélération maximale du véhicule MAX_VEH_ACCEL, de la vitesse du véhicule VEH_SPD et le typage global de la fonction responsable du choix de l'état chaîne cinématique DLS_TGT_FCT_TYP.

La troisième étape 3 permet de déterminer la contrainte d'accélération actualisée FINAL_ACCEL_CST_SAT en fonction de l'accélération maximale du véhicule MAX_VEH_ACCEL_CST dégradée et de la contrainte d'accélération existante en cas nominal FINAL_ACCEL_CST.

On va maintenant décrire plus en détails les différentes étapes.

La première étape 1 comprend quatre sous-étapes notées 11,12,13,14.

La première sous-étape 11 permet de déterminer la force résistive théorique appliquée au véhicule RES_FORC en fonction de la vitesse du véhicule VEH_SPD avec l'aide d'une cartographie, par exemple une table d'interpolation. Cette dernière peut également être provisionnée par une fonction tierce.

$$RES\_FORC = f(VEH\_SPD)$$

**EP 4 359 687 B1**

La deuxième sous-étape 12 permet de déterminer la force totale théorique appliquée sur véhicule TOT_VEH_FORC_DLS pour chaque état de la chaine cinématique en fonction de la force statique maximale disponible à la roue pour chaque état de la chaine cinématique MAX_WHL_FORC_DLS et de la force résistive théorique appliquée au véhicule RES_FORC

$$TOT\_VEH\_FORC\_DLS = MAX\_WHL\_FORC\_DLS - RES\_FORC$$

MAX_WHL_FORC_DLS et TOT_VEH_FORC_DLS sont des vecteurs de dimension X (X étant le nombre d'états de chaîne cinématique présents dans le groupe motopropulseur).

La troisième sous-étape 13 permet de déterminer l'accélération maximale de chaque état de la chaine cinématique MAX_VEH_ACCEL_DLS en fonction des masses équivalentes de chaque état de la chaine cinématique du véhicule VEH_EQ_WGHT_DLS et de la force totale théorique appliquée sur véhicule TOT_VEH_FORC_DLS pour chaque état de la chaine cinématique.

$$MAX\_VEH\_ACCEL\_DLS = TOT\_VEH\_FORC\_DLS / VEH\_EQ\_WGHT\_DLS$$

L'accélération maximale de chaque état de la chaine cinématique MAX_VEH_ACCEL_DLS et les masses équivalentes de chaque état de la chaine cinématique du véhicule VEH_EQ_WGHT_DLS sont compris chacun dans un vecteur de dimension X.

La quatrième sous-étape 14 permet de déterminer l'accélération maximale du véhicule MAX_VEH_ACCEL en fonction de l'accélération maximale de chaque état de la chaine cinématique MAX_VEH_ACCEL_DLS

L'accélération maximale du véhicule MAX_VEH_ACCEL est définie comme la valeur maximale parmi l'accélération maximale de chaque état de la chaine cinématique MAX_VEH_ACCEL_DLS.

$$MAX\_VEH\_ACCEL = max (MAX\_VEH\_ACCEL\_DLS)$$

La deuxième étape 2 comprend deux sous-étapes notées 21,22 et a pour but l'estimation de l'accélération maximale du véhicule MAX_VEH_ACCEL_CST, dégradée. Dans le cas d'une baisse des performances du groupe motopropulseur liée soit à la baisse des couples maximaux offerts par les organes de tractions, soit au choix d'un mode (EV ou Hybride versus mode Sport), l'accélération maximale du véhicule MAX_VEH_ACCEL_CST, dégradée évolue en temps réel fournissant chaque fois la force statique maximale disponible à la roue prenant en compte la baisse de performance.

La contrainte d'accélération finale doit s'adapter à cette baisse de performance et être constamment inférieure ou égale à l'accélération que le groupe motopropulseur est capable de fournir. Selon le mode choisir (EV, Sport etc.), l'écart entre l'accélération disponible au niveau du groupe motopropulseur et l'accélération requise par le conducteur peut différer. L'estimation d'un coefficient de performance COEFF_PERF est alors essentiel pour tenir compte de cet écart.

La première sous-étape 21 de la deuxième étape 2 permet de déterminer le coefficient de performance COEFF_PERF en fonction de la vitesse du véhicule VEH_SPD et du typage global de la fonction responsable du choix de l'état chaîne cinématique DLS_TGT_FCT_TYP avec l'aide d'une cartographie, par exemple une table d'interpolation.

Le typage global de la fonction responsable du choix de l'état chaîne cinématique DLS_TGT_FCT_TYP comporte plusieurs typages dont la valeur est élaborée en fonction du mode de conduite du conducteur (Economique, Neutre, Dynamique, etc.) et en fonction de contraintes de dépollution (Phase de chauffage du catalyser en cours, etc.) ou autres besoins.

La deuxième sous-étape 22 de la deuxième étape 2 permet de déterminer l'accélération maximale du véhicule dégradée MAX_VEH_ACCEL_CST en fonction du coefficient de performance COEFF_PERF et de l'accélération maximale du véhicule MAX_VEH_ACCEL.

L'accélération maximale que le véhicule peut assurer MAX_VEH_ACCEL_CST dégradée est définie comme le produit de l'accélération maximale du véhicule MAX_VEH_ACCEL et du coefficient de performance COEFF_PERF.

$$MAX\_VEH\_ACCEL\_CST = COEFF\_PERF \cdot MAX\_VEH\_ACCEL$$

La sous-étape 31 de la troisième étape 3 a pour but d'assurer que cette stratégie d'adaptation intervient uniquement si une baisse de performance a lieu. Pour réaliser cela, la contrainte d'accélération actualisée FINAL_ACCEL_CST_SAT est déterminée comme le minimum entre l'accélération maximale MAX_VEH_ACCEL_CST dégradée, et la contrainte d'accélération existante en cas nominal FINAL_ACCEL_CST.

$$FINAL\_ACCEL\_CST.\ FINAL\_ACCEL\_CST\_SAT$$
$$= min(MAX\_VEH\_ACCEL\_CST, FINAL\_ACCEL\_CST)$$

La contrainte d'accélération actualisée, nommée FINAL_ACCEL_CST_SAT prenant en compte la baisse de performance du groupe motopropulseur est ensuite utilisée à la fin pour définir les états de chaîne cinématique pouvant être choisis comme cible pour la transmission automatique.

**Revendications**

1. Procédé de commande pour un véhicule automobile, muni d'un groupe motopropulseur et d'une transmission automatique, comprenant les étapes suivantes :

   • on détermine la vitesse du véhicule, la force statique maximale disponible à la roue pour chaque état de la chaine cinématique, les masses équivalentes de chaque état de la chaine cinématique du véhicule et une contrainte d'accélération existante en cas nominal,
   • lorsque l'on détermine qu'une baisse des performances du groupe motopropulseur a lieu, on réalise les étapes suivantes :
   • on détermine (1) l'accélération maximale du véhicule en fonction de la vitesse du véhicule, de la force statique maximale disponible à la roue pour chaque état de la chaine cinématique et des masses équivalentes de chaque état de la chaine cinématique du véhicule,
   • on détermine (2) une accélération maximale du véhicule dégradée en fonction de l'accélération maximale du véhicule, de la vitesse du véhicule et d'un typage global de la fonction responsable du choix de l'état chaîne cinématique,
   • on détermine (3) une contrainte d'accélération actualisée en fonction de l'accélération maximale du véhicule dégradée et de la contrainte d'accélération existante en cas nominal,
   • on détermine un état de chaine cinématique en fonction de la contrainte d'accélération actualisée, et on commande la transmission automatique en fonction de l' état de chaine cinématique déterminé.

2. Procédé de commande selon la revendication 1, dans lequel, pour déterminer l'accélération maximale du véhicule, on réalise les étapes suivantes :

   • on détermine (11) une force résistive théorique appliquée au véhicule en fonction de la vitesse du véhicule avec l'aide d'une cartographie,
   • on détermine (12) la force totale théorique appliquée sur véhicule pour chaque état de la chaine cinématique en fonction de la force statique maximale disponible à la roue pour chaque état de la chaine cinématique et de la force résistive théorique appliquée au véhicule,
   • on détermine (13) l'accélération maximale de chaque état de la chaine cinématique en fonction des masses équivalentes de chaque état de la chaine cinématique du véhicule et de la force totale théorique appliquée sur véhicule pour chaque état de la chaine cinématique
   • on détermine l'accélération maximale du véhicule comme la valeur maximale parmi l'accélération maximale de chaque état de la chaine cinématique.

3. Procédé de commande selon l'une quelconque des revendications précédentes, dans lequel pour déterminer l'accélération maximale du véhicule dégradée, on réalise les étapes suivantes :

   • on détermine (21) un coefficient de performance en fonction de la vitesse du véhicule, du typage global de la fonction responsable du choix de l'état chaîne cinématique et d'une cartographie,
   • on détermine (22) l'accélération maximale du véhicule dégradée comme le produit de l'accélération maximale du véhicule et du coefficient de performance.

4. Procédé de commande selon l'une quelconque des revendications précédentes, dans lequel on détermine la contrainte d'accélération actualisée comme la valeur maximale parmi l'accélération maximale du véhicule dégradée et la contrainte d'accélération existante en cas nominal.

**Patentansprüche**

1. Steuerverfahren für ein Kraftfahrzeug, das mit einem Antriebsaggregat und einem Automatikgetriebe ausgestattet ist, umfassend die folgenden Schritte:

   • man bestimmt die Fahrzeuggeschwindigkeit, die für jeden Antriebsstrangzustand am Rad verfügbare maximale statische Kraft, die äquivalenten Massen jedes Antriebsstrangzustands des Fahrzeugs und eine im Nominalfall vorhandene Beschleunigungsvorgabe;
   • wenn bestimmt wird, dass ein Sinken der Leistungen des Antriebsaggregats stattfindet, führt man die folgenden Schritte aus:
   • man bestimmt (1) die maximale Beschleunigung des Fahrzeugs in Abhängigkeit von der Fahrzeuggeschwindigkeit, von der für jeden Antriebsstrangzustand am Rad verfügbaren maximalen statischen Kraft und von den äquivalenten Massen jedes Antriebsstrangzustands des Fahrzeugs;
   • man bestimmt (2) eine degradierte maximale Beschleunigung des Fahrzeugs in Abhängigkeit von der maximalen Beschleunigung des Fahrzeugs, von der Fahrzeuggeschwindigkeit und von der Gesamttypisierung der Funktion, die für die Auswahl des Antriebsstrangzustands verantwortlich ist,
   • man bestimmt (3) eine aktualisierte Beschleunigungsvorgabe in Abhängigkeit von der degradierten maximalen Beschleunigung des Fahrzeugs und von der im Nominalfall vorhandenen Beschleunigungsvorgabe;
   • man bestimmt einen Antriebsstrangzustand in Abhängigkeit von der aktualisierten Beschleunigungsvorgabe und man steuert das Automatikgetriebe in Abhängigkeit von dem bestimmten Antriebsstrangzustand.

2. Steuerverfahren nach Anspruch 1, bei dem zum Bestimmen der maximalen Beschleunigung des Fahrzeugs die folgenden Schritte ausgeführt werden:

   • man bestimmt (11) eine theoretische Widerstandskraft, die auf das Fahrzeug in Abhängigkeit von der Fahrzeuggeschwindigkeit ausgeübt wird, mithilfe eines Kennfelds,
   • man bestimmt (12) die theoretische Gesamtkraft, die auf das Fahrzeug für jeden Antriebsstrangzustand ausgeübt wird, in Abhängigkeit von der für jeden Antriebsstrangzustand am Rad verfügbaren maximalen statischen Kraft und von der auf das Fahrzeug ausgeübten theoretischen Widerstandskraft,
   • man bestimmt (13) die maximale Beschleunigung jedes Antriebsstrangzustands in Abhängigkeit von den äquivalenten Massen jedes Antriebsstrangzustands des Fahrzeugs und von der für jeden Antriebsstrangzustand auf das Fahrzeug ausgeübten theoretischen Gesamtkraft
   • man bestimmt die maximale Beschleunigung des Fahrzeugs als den maximalen Wert unter der maximalen Beschleunigung jedes Antriebsstrangzustands.

3. Steuerverfahren nach einem der vorhergehenden Ansprüche, bei dem zum Bestimmen der degradierten maximalen Beschleunigung des Fahrzeugs die folgenden Schritte ausgeführt werden:

   • man bestimmt (21) einen Leistungskoeffizienten in Abhängigkeit von der Fahrzeuggeschwindigkeit, von der Gesamttypisierung der Funktion, die für die Wahl des Antriebsstrangzustands verantwortlich ist, und von einem Kennfeld,
   • man bestimmt (22) die degradierte maximale Beschleunigung des Fahrzeugs als das Produkt aus der maximalen Beschleunigung des Fahrzeugs und dem Leistungskoeffizienten.

4. Steuerverfahren nach einem der vorhergehenden Ansprüche, bei dem man die aktualisierte Beschleunigungsvorgabe als den maximalen Wert unter der degradierten maximalen Beschleunigung des Fahrzeugs und der im Nominalfall vorhandenen Beschleunigungsvorgabe bestimmt.

**Claims**

1. Control method for a motor vehicle, provided with a powertrain and with an automatic transmission, comprising the following steps:

   • determining the speed of the vehicle, the maximum static force available at the wheel for each state of the drive train, the equivalent masses of each state of the drive train of the vehicle and an existing acceleration constraint in a nominal case,
   • when it is determined that a drop in performance of the powertrain takes place, the following steps are carried out:

- determining (1) the maximum acceleration of the vehicle as a function of the speed of the vehicle, of the maximum static force available at the wheel for each state of the drive train and of the equivalent masses of each state of the drive train of the vehicle,
- determining (2) a degraded maximum acceleration of the vehicle as a function of the maximum acceleration of the vehicle, of the speed of the vehicle and of a global typing of the function responsible for the choice of the drive train state,
- determining (3) an updated acceleration constraint as a function of the degraded maximum acceleration of the vehicle and of the existing acceleration constraint in a nominal case,
- determining a drive train state as a function of the updated acceleration constraint, and controlling the automatic transmission as a function of the determined drive train state.

2. Control method according to Claim 1, wherein, to determine the maximum acceleration of the vehicle, the following steps are carried out:

- determining (11) a theoretical resistive force applied to the vehicle as a function of the speed of the vehicle with the aid of a map,
- determining (12) the theoretical total force applied to the vehicle for each state of the drive train as a function of the maximum static force available at the wheel for each state of the drive train and of the theoretical resistive force applied to the vehicle,
- determining (13) the maximum acceleration of each state of the drive train as a function of the equivalent masses of each state of the drive train of the vehicle and of the theoretical total force applied to the vehicle for each state of the drive train,
- determining the maximum acceleration of the vehicle as the maximum value among the maximum acceleration of each state of the drive train.

3. Control method according to either one of the preceding claims, wherein, to determine the degraded maximum acceleration of the vehicle, the following steps are carried out:

- determining (21) a performance coefficient as a function of the speed of the vehicle, of the global typing of the function responsible for the choice of the drive train state and of a map,
- determining (22) the degraded maximum acceleration of the vehicle as the product of the maximum acceleration of the vehicle and of the performance coefficient.

4. Control method according to any one of the preceding claims, wherein the updated acceleration constraint is determined as the maximum value among the degraded maximum acceleration of the vehicle and the existing acceleration constraint in a nominal case.

[Fig 1]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2992040
- FR 3086362
- FR 3001936
- FR 3048937